**Europäisches Patentamt**

**European Patent Office**

**Office européen des brevets**

(11) Publication number : **0 452 083 A2**

## (12) EUROPEAN PATENT APPLICATION

(21) Application number : **91303105.0**

(22) Date of filing : **09.04.91**

(51) Int. Cl.⁵ : **B65H 57/00, H02G 1/10**

(30) Priority : **12.04.90 GB 9008354**

(43) Date of publication of application :
**16.10.91 Bulletin 91/42**

(84) Designated Contracting States :
**DE FR IT**

(71) Applicant : **NORTHERN TELECOM EUROPE
LIMITED
1B Portland place
London W1N 3AA (GB)**

(72) Inventor : **Brown, Charles Jeremy
88 Altham Grove
Harlow, Essex CM20 2PJ (GB)**
Inventor : **Dixon, Timothy James
31 Cheneys Road
Leytonstone, London E11 3LL (GB)**

(74) Representative : **Dupuy, Susan Mary et al
Northern Telecom Europe Limited Patents and
Licensing West Road
Harlow Essex CM20 2SH (GB)**

(54) **Linear cable engines.**

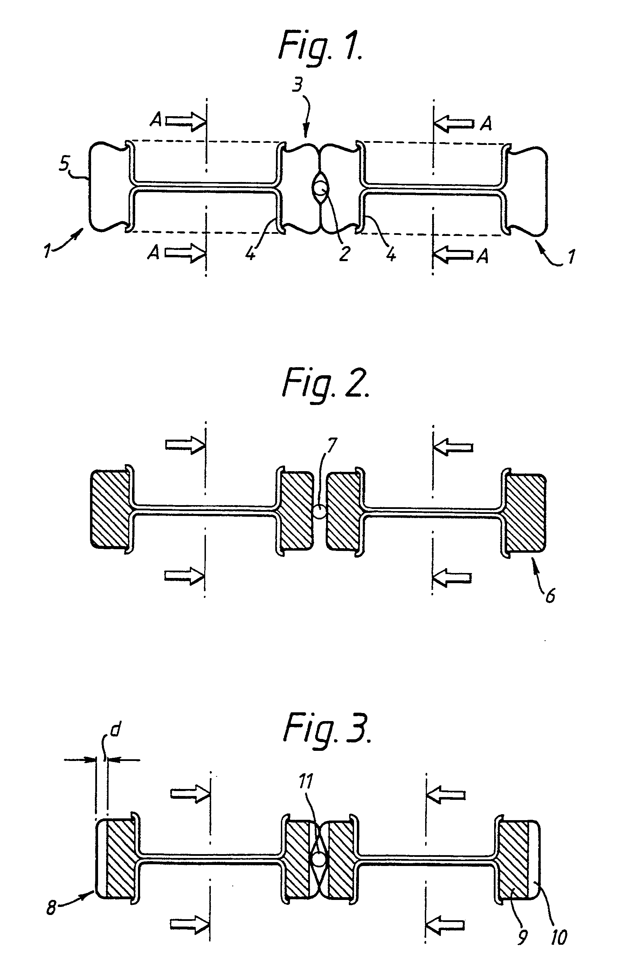

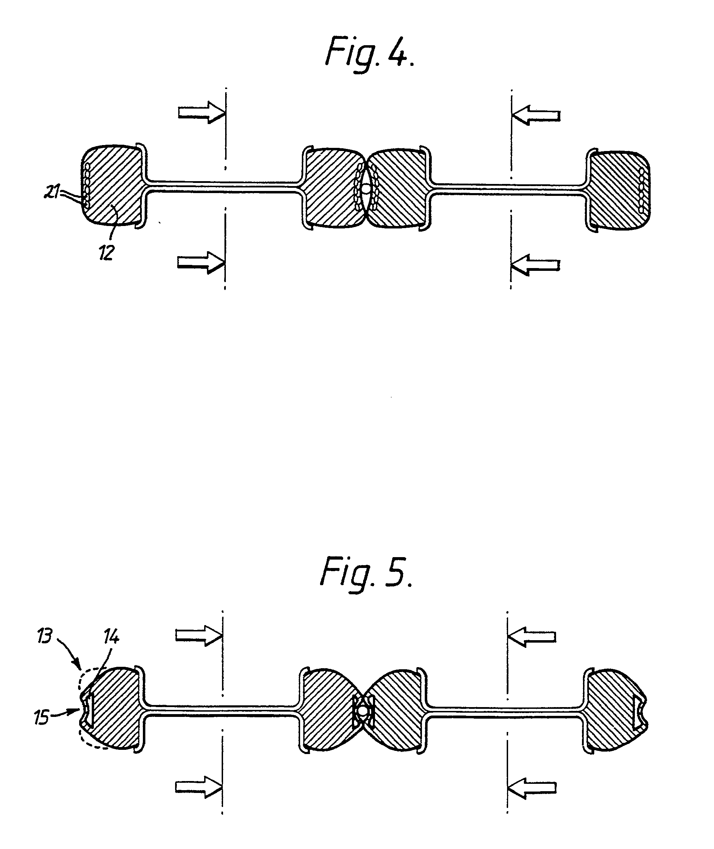

(57)   A tyre construction (8) specifically designed for linear cable engines which is such as to adequately grip the external surface of a cable (11) and to transfer load to the cable, particularly for small diameter (10-16mm, for example) cable. In one embodiment (Fig 3), the tyre has a solid zone (9) and a pneumatic zone (10) whose radial depth d is predetermined by the cable diameter (D) for optimum performance, for example in the range D/4 to D/2. The solid zone (9) only permits partial deformation of the pneumatic zone (10) sufficient for cable gripping and then serves in the load transfer. The pneumatic zone (10) may be of the form of a low-profile tyre or be provided by voids/cells (21 - Fig 4) disposed adjacent the radially outermost region of the tyre.

*Fig. 3.*

This invention relates to linear cable engines and in particular to tyres for the traction wheels of linear cable engines.

Linear cable engines are used on ships to deploy, recover and hold submarine cables during the installation of communication systems. The equipment procedures and practices are unlikely to change in the foreseeable future but the submarine cable designs are likely to change dramatically in the near future, with significant decreases in cable diameter. Our current fibre optic cables have outside diameters of 32mm (light weight screened cable) and 26mm (light weight) but future electro-optical-mechanical cables are likely to be significantly smaller, typically 10-16mm outside diameter. Linear cable engines basically comprise pairs of drivable traction wheels between which the cable is guided and which serve to grip the cable. There may be a large number (typically 18 to 27) of said pairs disposed in tandem. The traction wheel tyres of present linear cable engines are pneumatic and the conventionally employed tyres are not capable of gripping the smaller cables referred to above.

Linear cable engine tyres have two functions, firstly to grip the external surface of the cable adequately in both static and dynamic modes of use, and secondly to transfer load to the cable structure in order to prevent intercable movement under high outboard tensile loads.

In the case of linear cable engines with the pneumatic tyres used at present and conventional small diameter optical submarine cable (26mm), the tyres 1 are pressed together as indicated by arrows A and deform around the cable 2 as shown at 3 in the centre of Fig 1. The tyres 1 are mounted on wheel hubs 4, and are typically inflated to 120psi (8.27 bar). The tyre deformation grips the external surface of the cable, preventing tyre-cable slippage during deployment, recovery and static hold situations. Unfortunately, also because of the tyre deformation around the cable, the tyres themselves come into contact, resulting in an inefficient load transfer to the cable structure, whilst efficient load transfer is required to prevent intercable movement. The surface of the tyres can be siped at 5, provided with grooves parallel to the hub axis, to improve the grip on the cable, these grooves facilitating the drainage of water. It should be noted that the pneumatic tyres conventionally used were not designed specifically for the purposes of linear cable engines, rather they are aircraft tyres of the appropriate size.

The deformation of pneumatic tyres which leads to poor load transfer could be overcome by replacing the pneumatic tyres with solid tyres, such as are used for forklift trucks, but in this case tyre-cable grip decreases as the load transfer to internal cable elements increases. This is illustrated in Fig 2. The solid rubber tyres 6 do not deform around the cable 7, resulting in poor surface grip. Conventional pneumatic tyres are, therefore, not sufficiently hard, whilst solid tyres are too hard.

Thus neither pneumatic nor solid tyres will be able to fulfil the linear cable engine requirements for small diameter cables in the future.

We thus propose a tyre construction which is designed specifically for linear cable engines and provides adequate grip and load transfer, rather than merely to use existing tyres designed for other purposes and which do not satisfy both requirements particularly for the small cable diameters envisaged in the near future.

According to the present invention there is provided a tyre construction for use in a linear cable engine characterised by an annular solid zone with a radially outermost pneumatic zone at the radially outermost circumferential face of the solid zone, which pneumatic zone is such that in use it deforms a predetermined amount around the cable which is sufficient to grip the cable but which is prevented by the solid zone from further deformation, load transfer to the cable being achieved via the solid zone.

Embodiments of the invention will now be described with reference to the accompanying drawings, in which:

Fig 1 illustrates a cross-section through a linear cable engine traction wheel pair having conventional pneumatic tyres and when used with a conventional small diameter (26mm) optical submarine cable;

Fig 2 illustrates a cross-section through a linear cable engine traction wheel pair having solid tyres and used with a conventional small diameter (26mm) optical submarine cable;

Fig 3 illustrates a cross-section through a linear cable engine traction wheel pair having partially deformable tyres according to one embodiment of the present invention and used with a small diameter optical submarine cable;

Fig 4 illustrates a cross-section through a linear cable engine traction wheel pair having tyres according to a second embodiment of the present invention, and

Fig 5 illustrates a cross-section through a linear cable engine traction wheel pair having tyres according to a third embodiment of the present invention.

The tyres construction of the present invention is termed "partially deformable". Fig 3 illustrates a pair of linear cable engine traction wheels with one embodiment of such partially-deformable tyres 8. The tyres 8 have a radially innermost, annular, solid zone or substrate 9 and a radially outermost pneumatic (pneumatically active) zone 10 which is at the radially outermost circumferential face of the zone 9. Both zones may be of conventional resilient tyre materials e.g. rubber. The depth (radial thickness) d of the pneumatically active zone 10 is related to the diameter D of the cable 11 and is typically in the range D/4 to D/2. Typically, d will be 2.5 - 10mm. The tyre construction is such that initially the pneumatically active zone 10 is allowed to deform around the cable in order to grip its surface. The deformation is, however, restricted when the pneumatic zone contacts the solid substrate 9 as shown in Fig 3. At this point further deformation is restricted and the load is transferred to the cable structure itself. The solid zone 9 may have a depth such that the outer diameter of the partially deformable tyres is similar to that in the currently used pneumatic tyres. In this way the same linear cable engine hubs, rims etc may be used with the new tyre design. The solid zone 9 is of rubber, for example, so as to be suitable for load transfer purposes as well as preventing damage which might occur if the solid zone were harder, for example, metallic, or indeed provided by the wheel rim itself, when the pneumatic zone contacts the solid zone. The radially outermost surface of the tyre can be siped to aid grip on the cable. The partially deformable tyre design can be optimised for each small cable diameter by varying the depth d of the pneumatically active zone 10.

The pneumatic zone of the embodiment of Fig 3 may be considered to be an ultra-low profile tyre and the latter may be comprised by tubeless tyre construction or include an inner tube and valve assembly.

Fig 3 provides the pneumatic zone by means of a conventional single annular space which is pressurised and disposed radially outermost with aspect to a solid annular zone. The pneumatic (pneumatically active) zone can alternatively (Fig 4) be provided by a plurality of voids or cells 21 disposed adjacent the radially outermost region (circumferential face) of the tyre, that is of the solid annular zone 12. The voids or cells 21 may be annular or in fact of any shape, length or cross-section which is such that the outermost region of the tyre locally deforms sufficiently to grip the cable in use. The void/cells are themselves partially deformed when the cable is gripped between the tyres, as indicated at the centre of Fig 4.

In order to reduce tyre wear, the tyre profile itself can be changed, removing the shoulders 13 (Fig 5) indicated by a dashed line so that the width of tyre-tyre contact region is reduced. This is achieved by tapering the width of the tyre in the radially outward direction over at least a portion of the tyre adjacent the radially outermost periphery (circumferential face). The tyre-tyre contact region is thus of a width less than the maximum tyre width. The pneumatically active zone 14 can be formed of a single cells or pluralities of voids/cells. There may be a preformed groove (V-notch) 15 in which the cable is disposed for passage through the linear cable engine which also serves to reduce (limit) the amount of tyre-tyre contact.

## Claims

1. A tyre construction for use in a linear cable engine characterised by an annular solid zone (9; 12) with a radially outermost pneumatic zone (10; 21; 14) at the radially outermost circumferential face of the solid zone (9; 12), which pneumatic zone is such that in use it deforms a predetermined amount around the cable (11) which is sufficient to grip the cable but which is prevented by the solid zone (9; 12) from further deformation, load transfer to the cable being achieved via the solid zone.

2. A tyre construction as claimed in claim 1 characterised in that the solid zone is of rubber.

3. A tyre construction as claimed in claim 1 or claim 2 characterised in that the pneumatic zone is in the form of a low-profile tyre with a radial thickness predetermined by the cable diameter.

4. A tyre construction as claimed in claim 3 characterised in that the radial thickness of the pneumatic zone is of the order of one quarter to one half of the cable diameter.

5. A tyre construction as claimed in claim 3 characterised in that the pneumatic zone is in the form of a tubeless tyre.

6. A tyre construction as claimed in claim 3 characterised in that the pneumatic zone includes an inner tube and valve assembly.

7. A tyre construction as claimed in claim 1 characterised in that the pneumatic zone is provided by a plurality of voids or cells disposed adjacent the radially outermost circumferential face of the tyre, which voids or cells are at least partially deformed when a cable is gripped between pairs of such tyres.

8. A tyre construction as claimed in any one of the preceding claims characterised in that the radially outermost circumferential face (Fig. 5)of the tyre is preformed with a groove (15) for receiving a cable in use thereof.

9. A tyre construction as claimed in claim 1 characterised in that the width of the tyre tapers in the radially outward direction over at least a portion thereof adjacent the radially outermost (circumferential face (Fig. 5), whereby when a cable is gripped between a pair of such tyres the width of the contact region between the tyres is less than the maximum width of the tyres.

10. A tyre construction as claimed in any one of the preceding claims characterised in that the radially outermost surface of the pneumatic zone is siped.

*Fig. 1.*

*Fig. 2.*

*Fig. 3.*

# Fig. 4.

# Fig. 5.